# FASCICULE DE BREVET EUROPEEN

(11) **EP 0 668 644 B1**
(45) Date de publication et mention de la délivrance du brevet: **16.12.1998**
(21) Numéro de dépôt: 95410007.9
(22) Date de dépôt: 31.01.1995
(51) Int. Cl.: H02B 1/32

(54) **Dispositif d'installation électrique à platine support équipé d'une bride de raccordement**
Elektrische trägerplatte Installationsvorrichtung mit einem Anschlussflansch
Electrical supporting plate installation device provided with a connecting flange

(30) Priorité: 17.02.1994 FR 9402013
(43) Date de publication de la demande: 23.08.1995
(73) Titulaire: SCHNEIDER ELECTRIC SA, 92100 Boulogne Billancourt (FR)
(72) Inventeur: Carle, Pierre, F-38050 Grenoble Cedex 09 (FR); Gerbier, Philippe, F-38050 Grenoble Cedex 09 (FR)
(74) Mandataire: Hecké, Gérard

(56) Documents cités:
- EP-A- 0 550 327
- FR-A- 2 571 183
- US-A- 2 648 032

## Description

L'invention est relative à un dispositif d'installation électrique, notamment pour armoire électrique comprenant une platine support ayant une surface d'appui plane pour la réception d'un appareillage électrique multipolaire, ladite surface étant pourvue d'une pluralité d'orifices et de découpes destinés à personnaliser la platine en fonction du type d'appareils à installer, et des moyens de fixation pour l'assemblage de la platine à une paire de première et deuxième entretoises d'adaptation assujetties transversalement à quatre montants verticaux d'un châssis.

Le document EP-A-0 550 327 décrit un dispositif de soutien et de guidage de câbles de transmission. Le dispositif est formé par des râteliers fixés à la partie inférieure d'un châssis équipé de cartes de circuits imprimés. Un tel dispositif est destiné à être utilisé dans une armoire de télécommunication.

Un premier objet de l'invention consiste à améliorer le montage de la platine sur le châssis, et à faciliter le raccordement de l'appareillage électrique par l'utilisateur.

Un deuxième objet de l'invention consiste à organiser la répartition et l'orientation des câbles en vue de leur maintien dans la zone de raccordement d'une cellule.

Le dispositif d'installation selon l'invention est caractérisé en ce que la platine est équipée d'au moins une bride orientable angulairement par rapport au plan de la surface d'appui , l'angle d'inclinaison étant choisi en fonction de la disposition des conducteurs de liaison de l'appareillage électrique dans la zone de raccordement, et que des moyens de retenue solidarisent les conducteurs de liaison à la bride.

La bride est soit intégrée, soit rapportée à la platine. Elle comporte une succession d'encoches semi-ouvertes échelonnées à intervalles réguliers correspondant au pas polaire de l'appareillage.

Selon une forme de réalisation préférée de l'invention, les moyens de fixation de la platine sont formés par deux longerons s'étendant horizontalement le long des grands côtés supérieur et inférieur de la surface d'appui, chaque longeron étant doté d'une patte d'encliquetage en forme de V coopérant avec une entaille de positionnement de la deuxième entretoise pour obtenir un effet d'arc-boutement lorsque la platine et la deuxième entretoise se trouvent sensiblement à angle droit. La deuxième entretoise de forme rectangulaire comprend une succession d'entailles verticales échelonnées dans le sens de la profondeur, et des languettes d'accrochage introduites dans des trous de l'un des montants, chaque languette étant incurvée de manière à subir une légère déformation élastique lors de l'assemblage de la platine à la première entretoise.

Des moyens additionnels de support des câbles sont agencés sur un flasque du côté extérieur de la première entretoise et en aval de la bride de la platine.

D'autres avantages ressortiront plus clairement de la description qui va suivre d'un mode de réalisation donné à titre d'exemple non limitatif, et représenté aux dessins annexés dans lesquels :

La figure 1 est une vue en perspective d'une platine d'installation assemblée à un châssis.

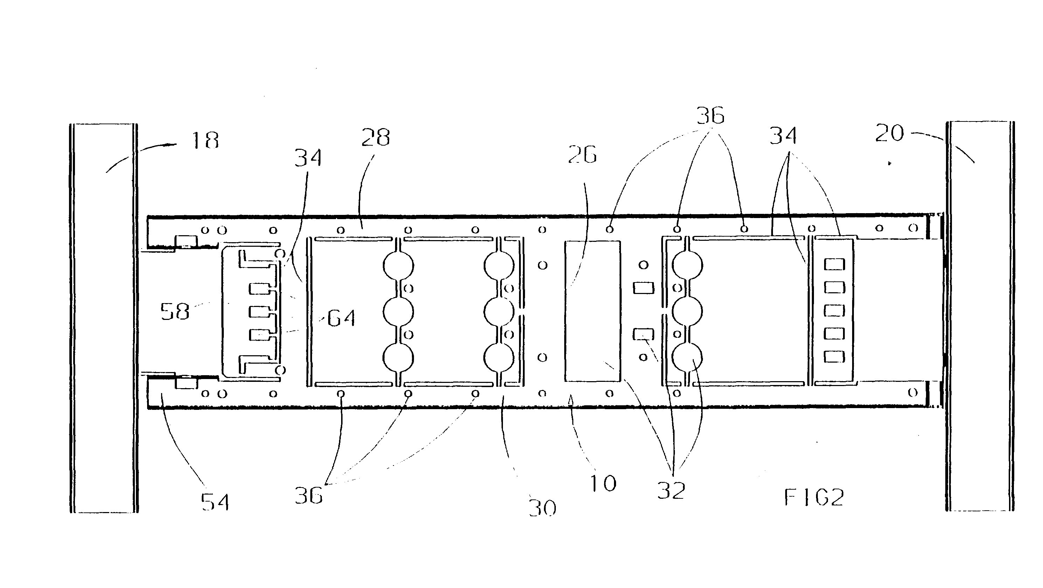

La figure 2 montre une vue en élévation de la figure 1.

La figure 3 est une vue en plan de la figure 1.

La figure 4 représente une vue en perspective illustrant la phase de montage de la deuxième entretoise sur deux montants du châssis.

La figure 5 est une vue en plan de la figure 4.

La figure 6 montre une vue de détail, à échelle agrandie d'une partie de la platine de la figure 2.

La figure 7 est une vue en perspective de la platine selon l'invention, avec un exemple d'orientation des câbles de raccordement de l'appareillage.

La figure 7A montre un détail de guidage de la filerie.

Les figures 8 et 9 montrent une vue en élévation et une vue en plan de la figure 7.

La figure 10 représente une vue en perspective de la platine avec un bornier de raccordement déporté de l'appareillage.

La figure 11 montre la platine de la figure 10 après connexion des câbles.

Les figures 12 et 13 sont des vues respectives en élévation et en plan de la figure 11.

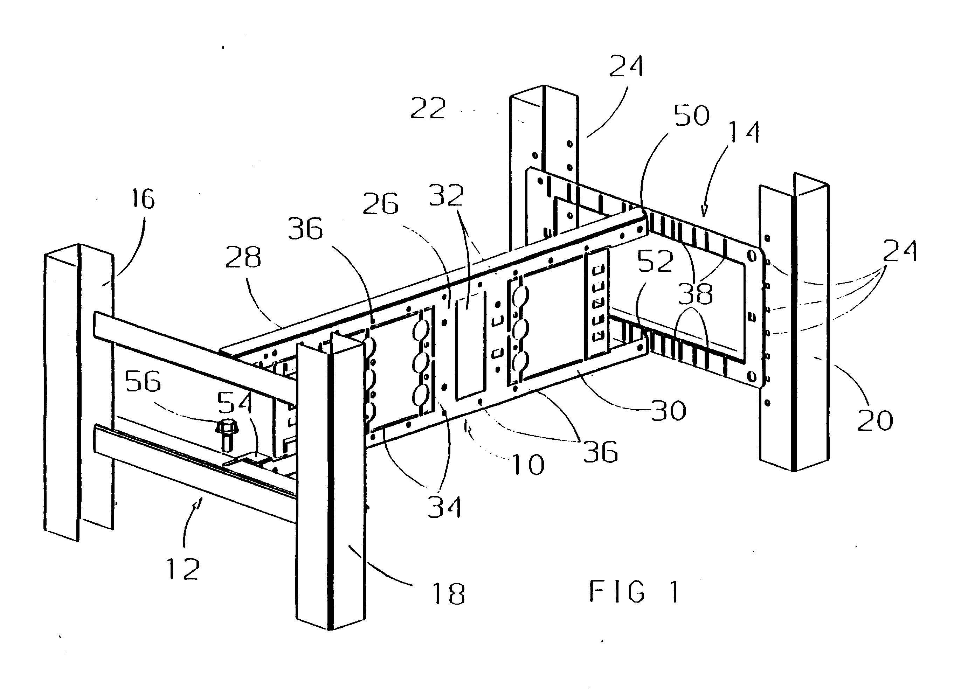

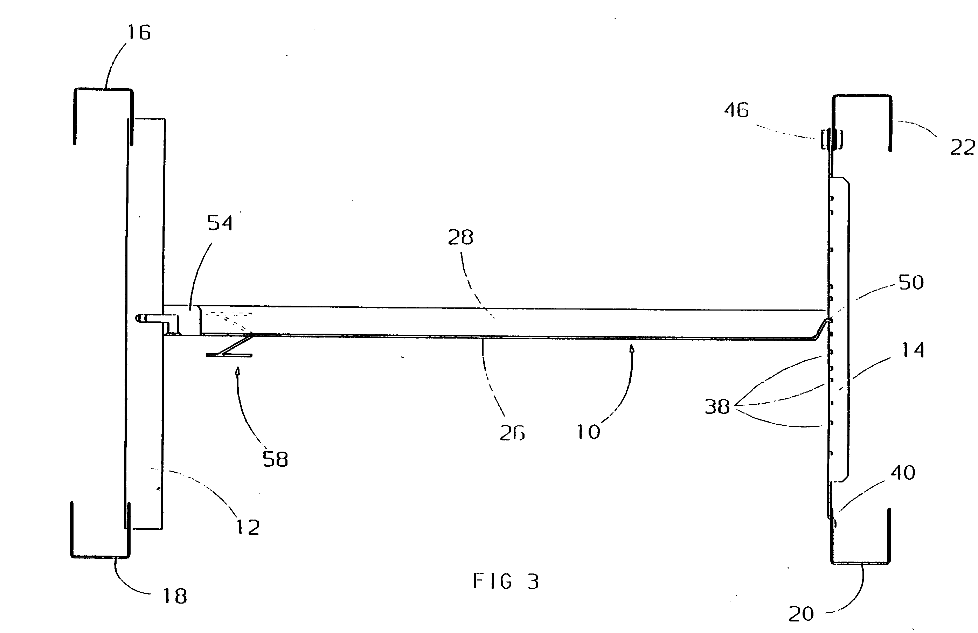

Sur les figures 1 et 3, une platine 10 support pour appareillage électrique est montée entre une paire de première et deuxième entretoises 12, 14 d'adaptation fixées transversalement à quatre montants 16, 18, 20, 22 verticaux à l'intérieur d'une armoire (non représentée) de forme parallélépipèdique. Chaque montant 16, 18, 20, 22 est formé par un profilé en U ayant dans chaque aile une succession de trous 24 échelonnés à intervalles réguliers le long de la direction longitudinale du profilé. Les deux montants 16, 18; 20, 22 d'un même côté s'étendent dans le sens de la hauteur, en étant disposés en regard l'un de l'autre avec leurs ailes respectives dirigées vers l'intérieur.

La platine 10 est agencée à un niveau prédéterminé de l'armoire, et il est clair que d'autres platines élémentaires de mêmes largeurs peuvent être adaptées aux montants 16 à 22 à des hauteurs différentes en fonction de l'architecture spécifique de l'armoire. La platine 10 est constituée à partir d'une tôle métallique et rectangulaire présentant une surface d'appui 26 de forme générale plane pour la réception de l'appareillage électrique, et une paire de longerons 28, 30 supérieur et inférieur pour la fixation aux entretoises 12, 14. Chaque longeron 28, 30 s'étend horizontalement le long d'un grand côté de la platine 10, et comprend une section en équerre ou en U permettant de renforcer la rigidité mécanique de la platine 10. Sur la surface d'appui 26 est répartie une pluralité d'orifices 32 circulaires ou rectangulaires et de découpes 34 ou prédécoupes en formes de fentes étroites, permettant l'adaptation, la fixation et le raccordement électrique de tous les types d'appareillage électrique. Les découpes 34 constituent des zones de faible résistance mécanique autorisant soit une action de cassure d'une portion prédéterminée de la surface d'appui 26, soit une action de pliage d'un élément de la tôle.

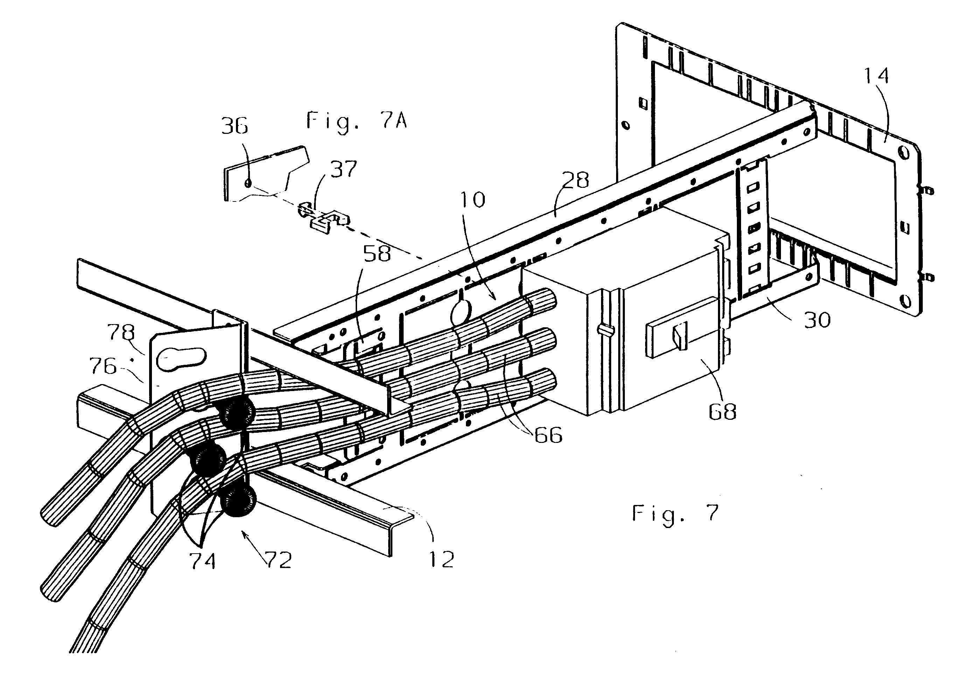

La fabrication de la platine 10 est opérée par des opérations de découpage et de pliage dans une presse à commande numérique. Chaque longeron 28, 30 comporte également une succession de trous 36 dans lesquels peuvent être rapportés des accessoires pour le positionnement et la circulation de la filerie auxiliaire, notamment des bracelets 37 ou des guides fils (figure 7A). La première entretoise 12 est constitué par une paire d'équerres en L.

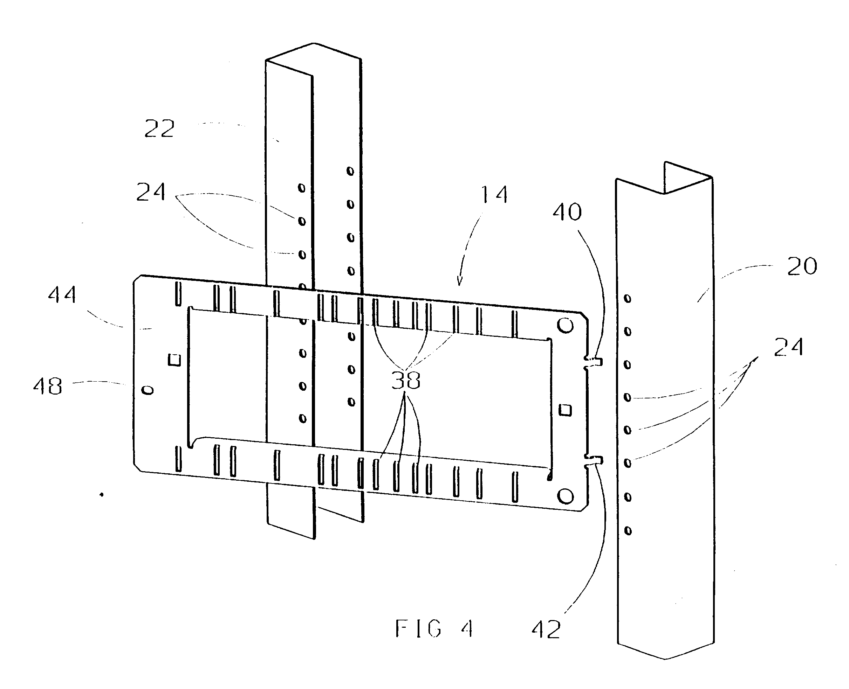

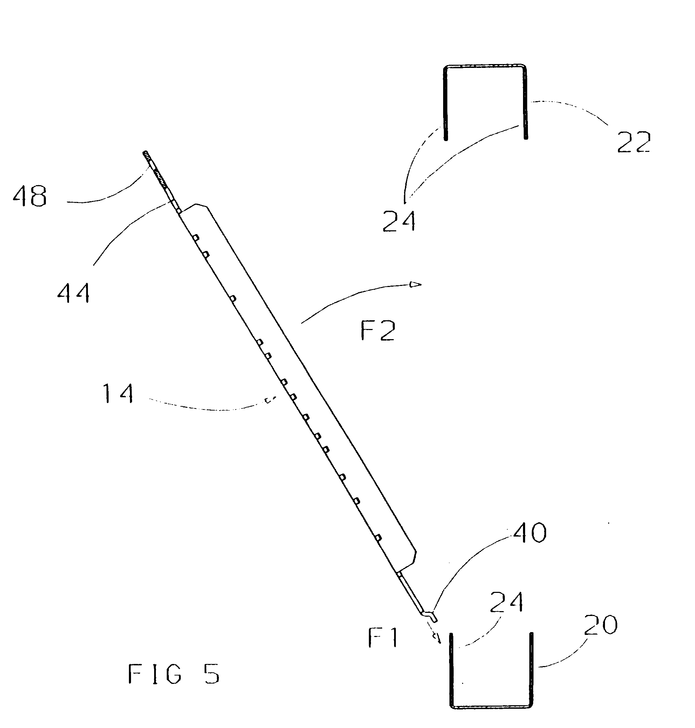

En référence aux figures 4 et 5, la deuxième entretoise 14 située à droite de la platine 10 comporte une succession d'entailles de positionnement 38 verticales et parallèles en étant échelonnées à intervalles prédéterminées de manière à permettre le réglage de la platine 10 dans le sens de la profondeur. Le montage de l'entretoise 14 rectangulaire sur les deux montants 20, 22 s'opère au moyen de deux languettes d'accrochage 40, 42 introduites dans deux trous 24 du montant 20 antérieur. La figure 5 représente la phase de mise en place de l'entretoise 14, laquelle s'effectue selon un premier mouvement de translation (flèche F1) pour l'insertion des languettes 40, 42 dans les trous 24 du montant 20, suivi d'un deuxième mouvement de pivotement (flèche F2) pour appliquer le bord opposé 44 de l'entretoise 14 sur une aile de montant postérieur 22. Des moyens de fixation 46, par exemple des vis ou boulons (figure 3) traversent ensuite un orifice 48 du bord 44 se trouvant en alignement avec un trou 24 du montant 22 pour fixer rigidement l'entretoise 14 aux deux montants 20, 22. Les languettes d'accrochage 40, 42 de formes incurvées sont agencées pour subir une légère déformation élastique vers la fin du mouvement de pivotement, suivie d'une action de coincement après mise en place des moyens de fixation 46, de manière à éviter les phénomènes de vibrations d'origine mécanique.

Chacun des deux longerons 28, 30 de la platine 10 est dotée à l'extrémité de droite d'une patte d'encliquetage 50, 52 en forme de V susceptible d'être insérée dans une entaille 38 prédéterminée de l'entretoise 14. Le montage de la platine 10 sur les entretoises 14, 12 s'effectue d'une manière analogue à celui de l'entretoise 14 sur les montants 20, 22. Après l'insertion des pattes 50, 52 de sections rectangulaires dans deux entailles 38 superposées, la platine 10 est pivotée dans le sens des aiguilles d'une montre de manière à solidariser le bord opposé 54 sur la première entretoise 12 au moyen de vis de fixation 56, dont une est représentée sur la figure 1. La coopération des pattes d'encliquetage 50, 52 en V dans les entailles 38 provoque également une action de coincement après montage final de la platine 10.

La réaction combinée des languettes 40, 42 d'accrochage dans les trous 24, et des pattes 50, 52 d'encliquetage dans les entailles de positionnement 38 permet d'obtenir un effet d'arc-boutement entre la platine 10 et l'entretoise 14 lorsque ces dernières se trouvent sensiblement à angle droit (figure 3). L'arc-boutement entraîne un rattrapage automatique des jeux de montage, et une mise sous contrainte mécanique modérée de la platine 10 au cours de la phase de serrage final de manière à éviter les phénomènes de vibrations d'origine mécanique.

Dans l'exemple représenté à la figure 1, la deuxième entretoise 14 présente un espace interne creux facilitant le passage des câbles de liaison avec l'appareillage. Il est clair que ce vide pourrait être obturé en rapportant une plaque auxiliaire en matériau métallique ou isolant, ayant des orifices de traversée pour les câbles.

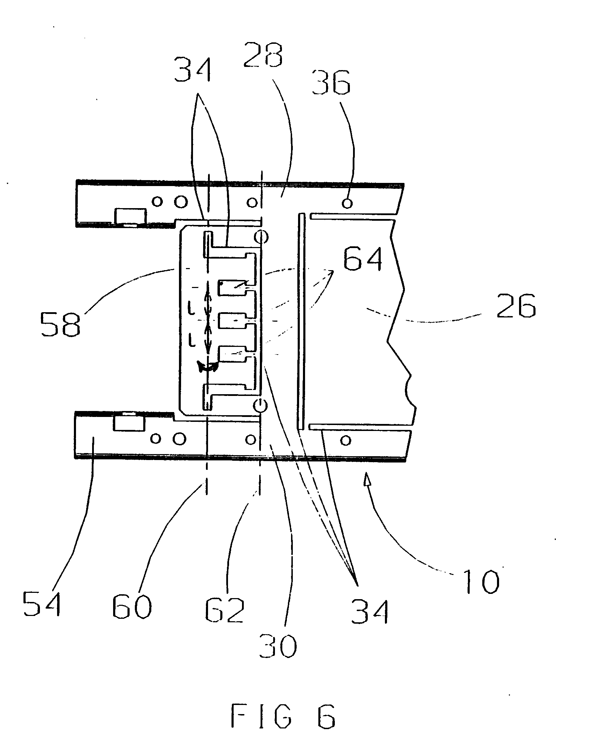

Sur la figure 6, la partie de gauche de la platine 10 comporte une bride d'extrémité 58 délimitée par des découpes 34 verticales et horizontales de manière à être orientable autour de deux axes 60, 62 verticaux qui s'étendent perpendiculairement aux longerons 28, 30. La bride 58 est pourvue d'autre part d'une pluralité d'encoches 64 semi-ouvertes échelonnées le long de l'axe 62 selon des intervalles L réguliers correspondant sensiblement au pas polaire de l'appareillage électrique. La longueur des intervalles L peut être de l'ordre de 25mm, 30mm, 35mm, 45mm ou 70mm selon le type d'appareillage multipolaire installé sur la platine 10.

Un capuchon isolant (non représenté)- peut être enfilé par encliquetage sur le chant de la bride 58 pour assurer des fonctions de marquage des câbles de départs, ou pour renforcer l'isolation lors de la fixation par colliers de conducteurs isolés.

L'orientation de la bride d'extrémité 58 peut s'effectuer dans les deux sens autour des deux axes 60, 62 pour se trouver soit en saillie (en traits pleins sur la figure 3), soit en retrait (en traits pointillés) par rapport à la surface d'appui 26 plane de la platine 10. L'angle d'orientation dans un sens donné est ajustable dans une fourchette de 0 à 30 degrés.

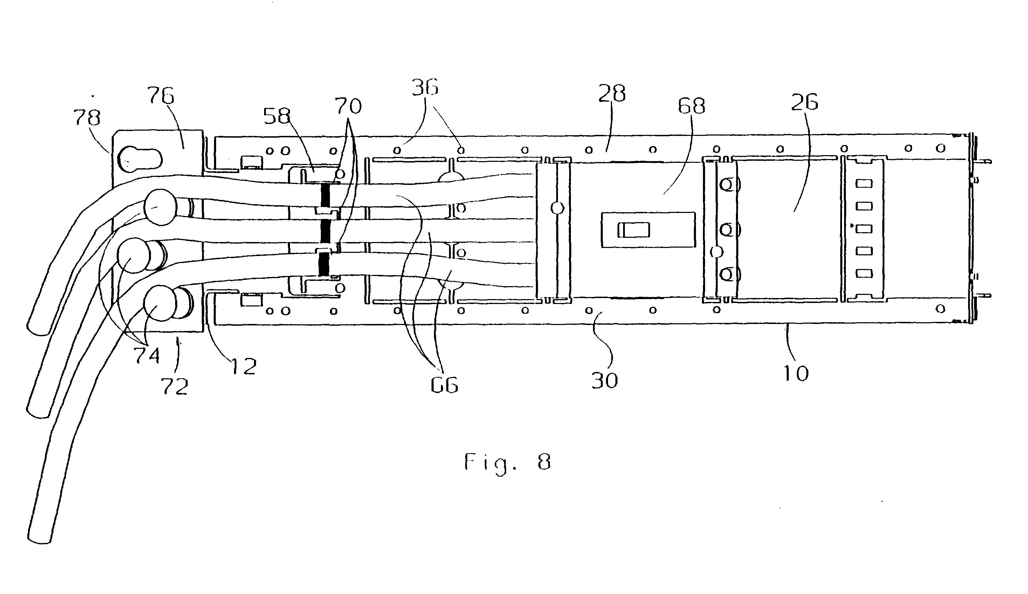

Le choix de l'orientation de la bride 58 s'opère en fonction de la répartition et de la courbure des câbles de sortie 66 de l'appareil électrique 68 (voir figures 7 et 8). Des colliers de frettage 70 peuvent traverser les encoches 64 de la bride 58 pour attacher les câbles 66 à la platine 10 de manière à soulager les contraintes mécaniques sur les bornes de raccordement de l'appareil 68.

La bride d'extrémité 58 est fabriquée automatiquement lors de l'opération de découpage de la platine 10.

Au lieu de rester intégrée à la platine 10, la bride 58 est détachable suivant l'axe 62 après quelques flexions provoquant la rupture des ponts de liaison entre les découpes 34. La bride 58 constitue alors un accessoire de guidage ou de positionnement adaptable en un autre endroit de la platine 10, ou de l'entretoise 14, notamment pour jouer le rôle d'organe de maintien de câbles.

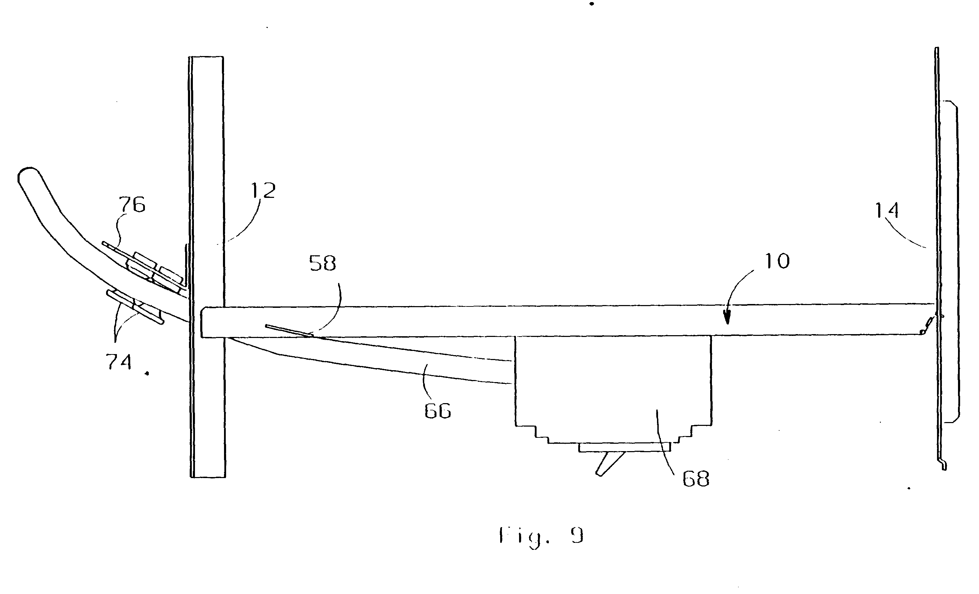

En référence aux figures 7 à 9, l'orientation des câbles de sortie 66 vers la zone de raccordement de l'armoire, est renforcée par la présence de moyens additionnels de support 72 des câbles 66.

Dans l'exemple des figures 7-9, ces moyens additionnels de support 72 comportent des plots d'amarrage 74 en matériau isolant agencés sur un flasque 76 fixé à l'extérieur de la première entretoise 12. Le flasque 76 est orienté vers l'arrière du plan de la platine 10 sollicitant un effet de courbure vers l'arrière des câbles 66. n est clair que le flasque 76 peut être orienté vers l'avant de la platine 10 pour inverser le sens de courbure des câbles 66.

Le raccordement des câbles 66 avec l'appareil 68 est facilité par la présence de ces plots d'amarrage 74, qui jouent le rôle d'organes d'appui avant le serrage des bornes. ll en résulte une bonne répartition des câbles 66 dans la zone de raccordement , avec un décalage des plots d'amarrage 74 correspondant sensiblement au pas polaire de l'appareil 68 ou des encoches 64 de la bride 58.

Chaque plot d'amarrage 74 présente une gorge annulaire dans laquelle repose le câble 66, et un pied de fixation encliquetable dans une ouverture 78 oblongue du flasque 76. Les ouvertures oblongues 78 sont disposées en quinconce, permettant ainsi le passage du câble entre les plots 74.

La fixation des câbles 66 peut être renforcée par des colliers de frettage entourant les plots 74.

Une étiquette (non représentée) est apposée sur les plots 74 pour assurer le repérage de l'ensemble des câbles de sortie 66.

Selon une variante (non représentée), les moyens additionnels de support 72 des câbles 66 sont formés par deux pièces symétriques isolantes susceptibles d'être accolées l'une contre l'autre pour ménager des ouvertures circulaires de passage des câbles.

La filerie (non représentée) en provenance des auxiliaires électriques se trouvant à l'intérieur de l'appareil 68 est supportée par les bracelets 37 le long du longeron supérieur 28 de la platine 10. Il est possible de remplacer les bracelets 37 par une goulotte en forme de U faisant partie intégrante de la platine 10.

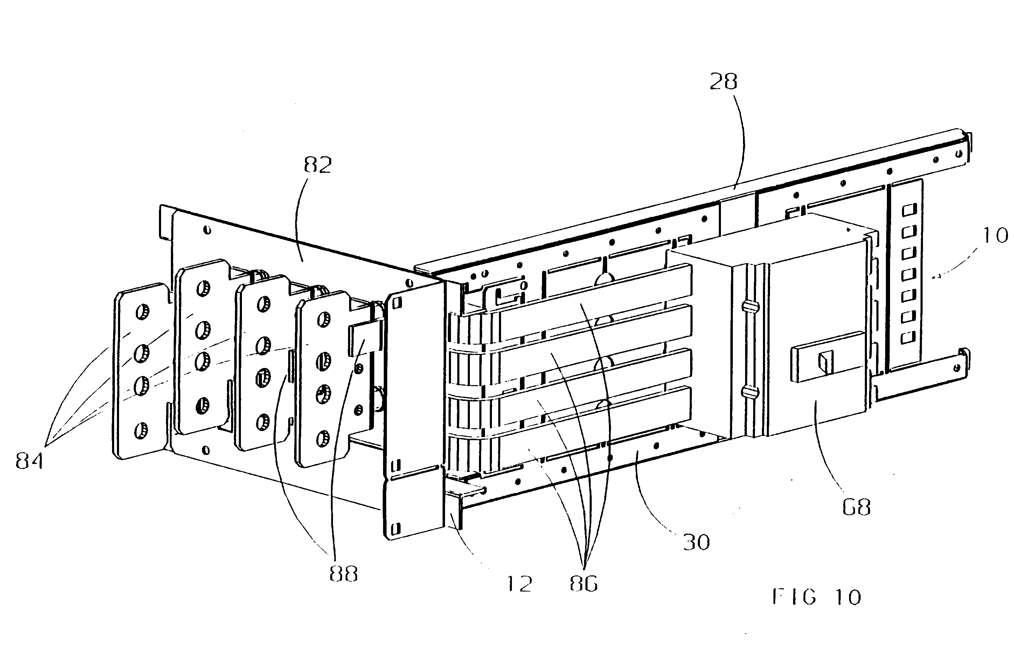

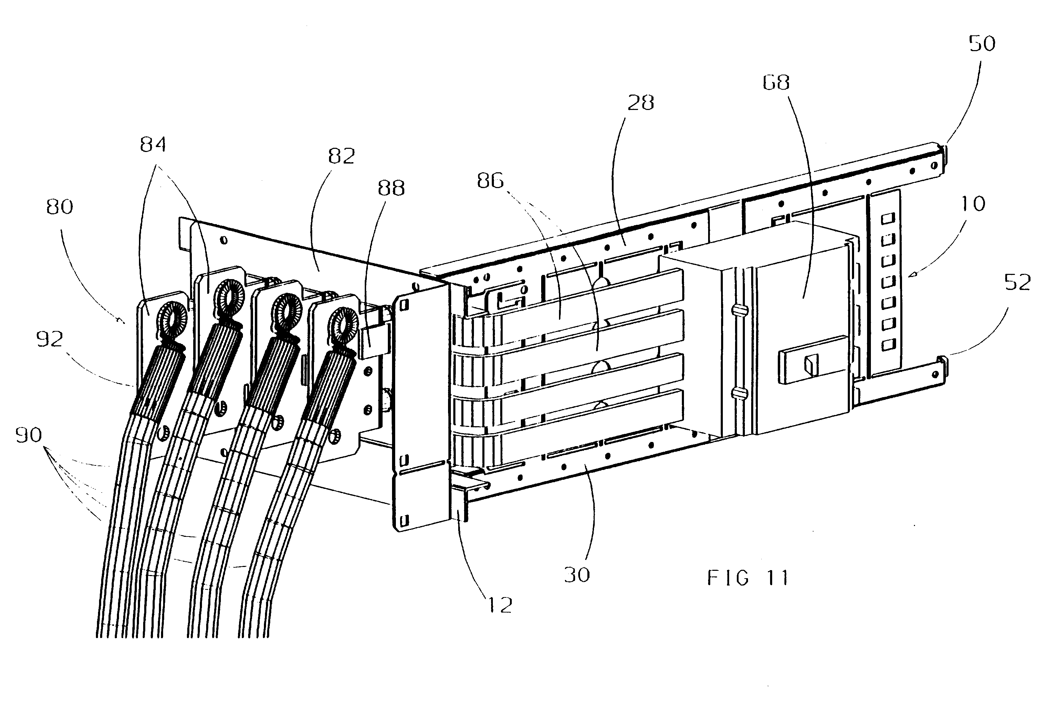

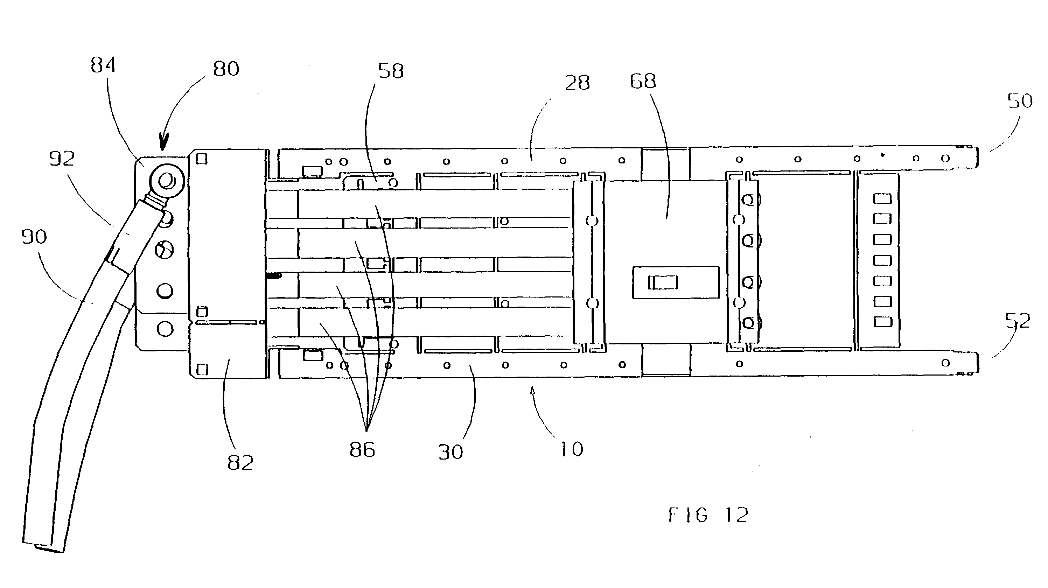

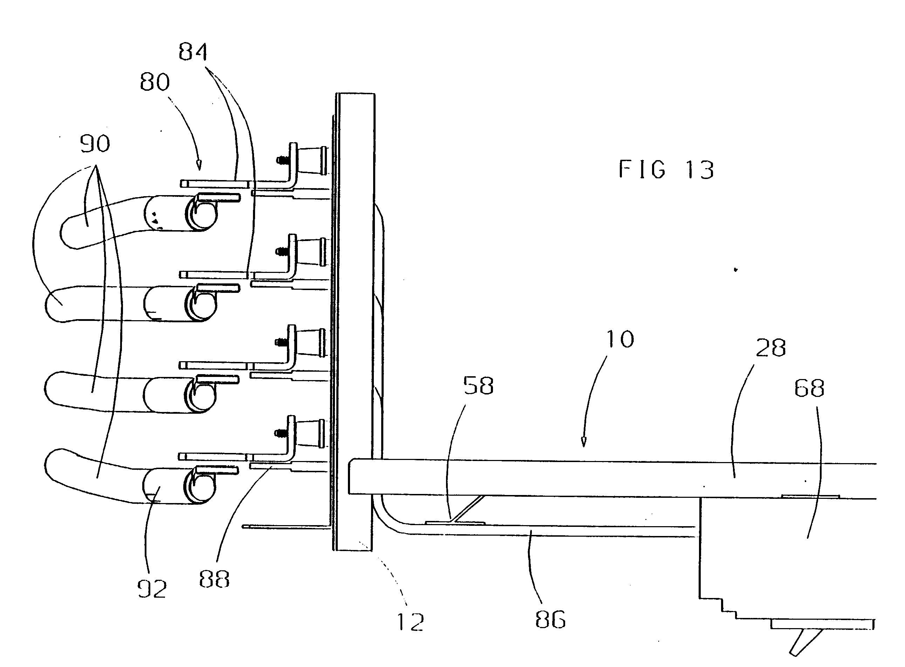

En référence aux figures 10 à 13, un bornier 80 est fixé transversalement sur la face externe d'une plaque 82 auxiliaire assujettie aux deux équerres de la première entretoise 12. Le bornier 80 comporte des plages 84 de raccordement à faces inclinées, reliées électriquement aux bornes de sortie de l'appareil 68 par des conducteurs de liaison 86, et des conducteurs de traversée 88. Les plages 84 sont isolées entre elles, et décalées à intervalles réguliers le long de la plaque 82 dans la direction transversale de l'entretoise 12. Les câbles de sortie 90 sont raccordés directement sur les plages 84 au moyen de cosses 92. La répartition des câbles 90 dans la zone de raccordement est ainsi effectuée automatiquement dans le sens de la profondeur de l'armoire. La reprise des efforts de serrage est absorbée par la plaque 82, ce qui évite la propagation des contraintes mécaniques sur les bornes de l'appareil 68.

Les conducteurs de liaison 86 sont formés par des barres en cuivre agencées dans un même plan parallèle à la surface d'appui 26 de la platine 10, et susceptibles de prendre appui sur la bride 58. L'orientation de la bride 58 est opérée en fonction de l'intervalle entre la platine 10 et la nappe des conducteurs 86.

La platine 10 et la plaque 82 sont parfaitement réversibles en fonction de l'arrivée des câbles 90. En cas d'arrivée des câbles 90 par le haut ou le bas de la cellule, il suffit d'inverser la plaque 82 du bornier 80. En cas d'arrivée à gauche ou à droite de la cellule, il est nécessaire de retourner la platine 10 en installant la deuxième entretoise d'adaptation 14 du côté des pattes d'encliquetage 50, 52 des longerons 28, 30.

## Revendications

1. Dispositif d'installation électrique, notamment pour armoire électrique comprenant une platine support (10) ayant une surface d'appui (26) plane pour la réception d'un appareillage électrique (68) multipolaire, ladite surface étant pourvue d'une pluralité d'orifices (32) et de découpes (34) destinés à personnaliser la platine (10) en fonction du type d'appareils à installer, et des moyens de fixation pour l'assemblage de la platine (10) à une paire de première et deuxième entretoises (12, 14) d'adaptation assujetties transversalement à quatre montants (16, 18, 20, 22) verticaux d'un châssis,
caractérisé en ce que
la platine (10) est équipée d'au moins une bride (58) orientable angulairement par rapport au plan de la surface d'appui (26), l'angle d'inclinaison étant choisi en fonction de la disposition des conducteurs de liaison (66, 86) de l'appareillage électrique (68) dans la zone de raccordement, et que des moyens de retenue (70) solidarisent les conducteurs de liaison (66, 86) à la bride (58).

2. Dispositif d'installation selon la revendication 1, caractérisé en ce que la bride (58) est intégrée à la platine (10) en étant délimitée par des découpes (34) autorisant un mouvement de pivotement autour d'un axe (60, 62) vertical.

3. Dispositif d'installation selon la revendication 1, caractérisé en ce que la bride (58) orientable est formée par une pièce rapportée à la surface d'appui (26).

4. Dispositif d'installation selon la revendication 2 ou 3, caractérisé en ce que la bride (58) comporte une pluralité d'encoches (64) semi-ouvertes échelonnées le long de l'axe de pivotement (62) selon des intervalles 1 réguliers correspondant au pas polaire de l'appareillage (68).

5. Dispositif d'installation selon la revendication 4, caractérisé en ce que les moyens de retenue (70) comportent des colliers de frettage traversant les encoches (64) de la bride (58).

6. Dispositif d'installation selon l'une des revendications 1 à 5, caractérisé en ce que les moyens de fixation de la platine (10) sont formés par deux longerons (28, 30) s'étendant horizontalement le long des grands côtés supérieur et inférieur de la surface d'appui (26), chaque longeron (28, 30) étant doté d'une patte d'encliquetage (50, 52) en forme de V coopérant avec une entaille (38) de positionnement de la deuxième entretoise (14) pour obtenir un effet d'arc-boutement lorsque la platine (10) et la deuxième entretoise (14) se trouvent sensiblement à angle droit.

7. Dispositif d'installation selon la revendication 6, caractérisé en ce que la deuxième entretoise (14) de forme rectangulaire comprend une succession d'entailles (38) verticales échelonnées dans le sens de la profondeur, et des languettes d'accrochage (40, 42) introduites dans des trous (24) de l'un des montants (20), chaque languette (40, 42) étant incurvée de manière à subir une légère déformation élastique lors de l'assemblage de la platine (10) à la première entretoise (12).

8. Dispositif d'installation selon l'une des revendications 1 à 7, caractérisé en ce que des moyens additionnels de support (72) des câbles (66) sont agencés sur un flasque (76) du côté extérieur de la première entretoise (12) et en aval de la bride (58) de la platine (10).

9. Dispositif d'installation selon la revendication 8, caractérisé en ce que les moyens additionnels de support (72) comportent des plots d'amarrage (74) servant d'organes d'appui pour les câbles (66) avant leur raccordement aux bornes de l'appareillage (68), et que le décalage des plots (74) correspond sensiblement au pas polaire de l'appareillage (68).

10. Dispositif d'installation selon l'une des revendications 1 à 5, caractérisé en ce qu'un bornier (80) est fixé à la face externe d'une plaque (82) auxiliaire solidaire de la première entretoise (12), ledit bornier (80) comportant des plages de raccordement (84) reliées électriquement aux bornes de sortie de l'appareillage (68) par des conducteurs de liaison (86) prenant appui sur la bride (58) et s'étendant selon une nappe parallèle à la platine (10).

## Patentansprüche

1. Elektroinstallationsvorrichtung, insbesondere für einen Schaltschrank, die eine Montageplatte (10) mit einer ebenen Auflagefläche (26) zur Aufnahme eines mehrpoligen elektrischen Schaltgeräts (68), welche genannte Fläche mehrere Öffnungen (32) und Ausschnitte (34) aufweist, die dazu dienen, die Montageplatte (10) an den Typ der jeweils zu installierenden Schaltgeräte individuell anzupassen, sowie Befestigungsmittel zur Verbindung der Montageplatte (10) mit einem ersten und einem zweiten Positionierträger (12, 14) umfaßt, die an vier vertikalen Holmen (16, 18, 20, 22) eines Chassis quer befestigt sind,
dadurch gekennzeichnet, daß
die Montageplatte (10) mindestens eine, bezüglich der Ebene der Auflagefläche (26) ausrichtbare Anschlußlasche (58) aufweist, wobei der Neigungswinkel in Abhängigkeit von der Anordnung der Verbindungsleiter (66, 86) des elektrischen Schaltgeräts (68) im Anschlußraum gewählt wird, und daß die Verbindungsleiter (66, 80) mit Haltemitteln (70) an der Lasche (58) befestigt sind.

2. Installationsvorrichtung nach Anspruch 1, dadurch gekennzeichnet, daß die Lasche (58) an die Montageplatte (10) angeformt und durch Ausschnitte (34) begrenzt ist, die eine Schwenkbewegung um eine vertikale Achse (60, 62) erlauben.

3. Installationsvorrichtung nach Anspruch 1, dadurch gekennzeichnet, daß die ausrichtbare Lasche (58) als an der Auflagefläche (26) befestigtes Teil ausgebildet ist.

4. Installationsvorrichtung nach Anspruch 2 oder 3, dadurch gekennzeichnet, daß die Lasche (58) mehrere halboffene Aussparungen (64) aufweist, die längs der Schwenkachse (62) in regelmäßigen, den Polabständen des Schaltgeräts (68) entsprechenden Abständen angeordnet sind.

5. Installationsvorrichtung nach Anspruch 4, dadurch gekennzeichnet, daß die Haltemittel (70) durch die Aussparungen (64) der Lasche (58) geführte Kabelbinder umfassen.

6. Installationsvorrichtung nach einem der Ansprüche 1 bis 5, dadurch gekennzeichnet, daß die Befestigungsmittel der Montageplatte (10) in Form von zwei Streben (28, 30) ausgebildet sind, die horizontal entlang der oberen und unteren Längsseite der Auflagefläche (26) verlaufen, wobei jede Strebe (28, 30) einen V-förmigen Rastansatz (50, 52) aufweist, der mit einem Positionierschlitz (38) des zweiten Positionierträgers (14) zusammenwirkt, um einen Strebbogeneffekt zu erzielen, wenn die Montageplatte (10) und der zweite Positionierträger (14) annähernd im rechten Winkel zueinander stehen.

7. Installationsvorrichtung nach Anspruch 6, dadurch gekennzeichnet, daß der zweite, rechteckige Positionierträger (14) eine Reihe von, in der Tiefenebene angeordneten senkrechten Schlitzen (38) sowie in Öffnungen (24) eines der Holme (20) eingeführte Haltenasen (40, 42) aufweist, wobei jede Haltenase (40, 42) so gebogen ist, daß sie bei der Befestigung der Montageplatte (10) auf dem ersten Positionierträger (12) eine leichte elastische Verformung erfährt.

8. Installationsvorrichtung nach einem der Ansprüche 1 bis 7, dadurch gekennzeichnet, daß an einer, an der Außenseite des ersten Positionierträgers (12), und auf der Abgangsseite der Lasche (58) der Montageplatte (10) befestigten Ansatzplatte (76) zusätzliche Stützmittel (72) für die Kabel (66) angeordnet sind.

9. Installationsvorrichtung nach Anspruch 8, dadurch gekennzeichnet, daß die zusätzlichen Stützmittel (72) Abspannstifte (74) umfassen, die als Stützelemente für die Kabel (66) vor deren Anschluß an die Klemmen des Schaltgeräts (68) dienen, und daß der Abstand zwischen den Stiften (74) annähernd den Polabständen des Schaltgeräts (68) entspricht.

10. Installationsvorrichtung nach einem der Ansprüche 1 bis 5, dadurch gekennzeichnet, daß ein Klemmbrett (80) an der Außenseite einer, fest mit dem ersten Positionierträger (12) verbundenen Hilfsplatte (82) befestigt ist, welches genannte Klemmbrett (80) Anschlußfahnen (84) umfaßt, die mit den Ausgangsklemmen des Schaltgeräts (68) über Verbindungsleiter (86) elektrisch verbunden sind, die sich auf der Lasche (58) abstützen und flachbandartig parallel zur Montageplatte (10) verlaufen.

## Claims

1. An electrical installation device, in particular for an electrical cabinet, comprising a mounting plate (10) having a flat bearing surface (26) to accommodate multipole electrical switchgear (68), said surface being provided with a plurality of holes (32) and cutouts (34) designed to customize the mounting plate (10) according to the type of switchgear to be fitted, and fixing means for assembling the mounting plate (10) to a pair of first and second adjustment spacers (12, 14) transversely secured to four vertical uprights (16, 18, 20, 22) of a frame,
characterized in that
the mounting plate (10) is equipped with at least one flange (58) angularly orientable with respect to the plane of the bearing surface (26), the angle of incline being chosen according to the arrangement of the connecting conductors (66, 86) of the electrical switchgear (68) in the connection area, and that the securing means (70) secure the connecting conductors (66, 86) to the flange (58).

2. The installation device according to claim 1, characterized in that the flange (58) is integrated in the mounting plate (10) being bounded by cutouts (34) authorizing a pivoting movement around a vertical axis (60, 62).

3. The installation device according to claim 1, characterized in that the orientable flange (58) is formed by a part added on to the bearing surface (26).

4. The installation device according to claim 2 or 3, characterized in that the flange (58) comprises a plurality of half-open notches (64) staggered along the pivoting axis (62) at regular intervals 1 corresponding to the polar pitch of the switchgear (68).

5. The installation device according to claim 4, characterized in that the securing means (70) comprise securing bands passing through the notches (64) of the flange (58).

6. The installation device according to one of the claims 1 to 5, characterized in that the means for fixing the mounting plate (10) are formed by two members (28, 30) extending horizontally along the top and bottom large sides of the bearing surface (26), each member (28, 30) being provided with a V-shaped clipping tab (50, 52) cooperating with a positioning notch (38) of the second spacer (14) to obtain a buttressing effect when the mounting plate (10) and the second spacer (14) are appreciably at right angles.

7. The installation device according to claim 6, characterized in that the rectangular second spacer (14) comprises a succession of vertical notches (38) staggered in the depthwise direction, and securing tongues (40, 42) inserted in holes (24) of one of the uprights (20), each tongue (40, 42) being curved so as to undergo a slight elastic deformation when the mounting plate (10) is assembled to the first spacer (12).

8. The installation device according to one of the claims 1 to 7, characterized in that additional support means (72) for supporting the cables (66) are arranged on a flange (76) on the outside of the first spacer (12) and downstream from the flange (58) of the mounting plate (10).

9. The installation device according to claim 8, characterized in that the additional support means (72) comprise securing studs (74) acting as bearing parts for the cables (66) before the latter are connected to the terminals of the switchgear apparatus (68), and that the stagger of the studs (74) corresponds appreciably to the polar pitch of the switchgear apparatus (68).

10. The installation device according to one of the claims 1 to 5, characterized in that a terminal Mock (80) is fixed to the extemal face of an auxiliary plate (82) fixedly secured to the first spacer (12), said terminal block (80) comprising connection strips (84) electrically connected to the output terminals of the switchgear apparatus (68) by connecting conductors (86) bearing on the flange (58) and extending in the form of a flat braid parallel to the mounting plate (10).
